# EUROPEAN PATENT SPECIFICATION

(11) **EP 1 169 390 B1**
(45) Date of publication and mention of the grant of the patent: **20.10.2004**
(21) Application number: 00922137.5
(22) Date of filing: 13.04.2000
(51) Int. Cl.: C08L 23/08

(54) **SLUSH MOLDABLE THERMOPLASTIC COMPOSITION**
THERMOPLASTISCHE ZUSAMMENSETZUNG FÜR SCHLICKERGIESSEN
COMPOSITION THERMOPLASTIQUE MOULABLE PAR EMBOUAGE

(30) Priority: 15.04.1999 US 129409 P
(43) Date of publication of application: 09.01.2002
(73) Proprietor: E.I. DUPONT DE NEMOURS AND COMPANY, Wilmington, DE 19808 (US)
(72) Inventor: HAUSMANN, Karlheinz, CH-2012 Auvernier (CH); KODOKIAN, George, K., Kennett Square, PA 19348 (US); PREJEAN, George, W., Orange, TX 77632 (US)
(74) Representative: Abitz, Walter, Dr.-Ing.
(86) International application number: PCT/US2000/009881
(87) International publication number: WO 2000/063286

(56) References cited:
- EP-A- 0 341 731
- WO-A-93/08234
- WO-A-97/35910
- US-A- 4 855 363
- DATABASE WPI Section Ch, Week 199915 Derwent Publications Ltd., London, GB; Class A32, AN 1999-174944 XP002142003 & JP 11 028732 A (TOYO RUBBER IND CO LTD), 2 February 1999 (1999-02-02)

## Description

### FIELD OF THE INVENTION

This invention relates to slush moldable thermoplastic compositions which exhibit excellent low temperature properties coupled with heat and scuff resistance and furthermore can be processed by powder slush molding and are useful for auto and boat interior applications.

### BACKGROUND OF THE INVENTION

Polyvinyl Chloride (PVC) has a solid place for use as a sheet material in automotive interior applications but is under attack due to the fact that it contains halogens and plasticisers. One of the applications of PVC in auto interiors is as a slush moldable material for door panels and dash boards. For the slush molding process powders are used. The plasticisers contained in these formulations facilitate the flow and the fusing of the powder in the slush molding process where the powder is brought in contact with a hot mold from where it has to be released thereafter. The presence of a high amount of plasticizers has however the negative effect of exaggerated fogging of the wind screen during hot summer days. This effect as well as the high Chlorine content of PVC has triggered the search for polymeric plasticizers or highly temperature stable plasticizers as described in US patent 5,036,124 and the search for halogen free slush molding systems. The most frequently used halogen free system are systems based on TPU (Thermoplastic Polyurethane). However, due to their high cost they are not an economical solution for the majority of cars. Alternatives have been promoted based on elastomer powders or polypropylene (PP). US 5,308,699 claims a slush moldable Ethylene Propylene (EP) rubber with a crosslinked EP phase, US 5,744,086 claims a PP based system. The drawback of these systems is the insufficient chemical resistance of these systems against chemical agents such as fluids which eventually require a costly surface protection, such as a lacquer on top of the slush molded sheet.

The composition described in the present invention overcomes these drawbacks by providing a composition comprising a powder comprising polar and thus solvent (fuel) resistant polymers which can be crosslinked in situ during the slush molding process.

WO97/35910 published October 2, 1997, discloses a multi-phase thermoplastic resin composition formulated with the following components: i. a polyamide resin having graft sites and a melting point greater than 200°C; ii. a polyamide resin having graft sites and a melting point of less than 200°C; iii. an acid-containing ethylene copolymer or ionomer; iv. a grafting agent-containing ethylene copolymer with reactive groups such as unsaturated epoxides; and v. grafted polyethylenes, grafted polypropylenes or grafted rubber containing reactive functional groups such as acids, esters, anhydrides, amines or alcohols.

WO93/08234 published April 29, 1993, discloses a four-component alloy containing the following : a. poly(1,4-butylene terephthalate); b. a grafting agent-containing ethylene copolymer with reactive groups such as unsaturated epoxides; c. an acid-containing ethylene ionomer; and d. a thermoplastic elastomer.

European Patent No. 341731 granted September 22, 1993 discloses a grafted, multi-phase, thermoplastic elastomer composition formed by melt blending: a. at least one thermoplastic resin selected from polyesters, copolyetheresters, polyamides and copolyetheramides; b. an acid-containing ethylene copolymer or ionomer; and c. a glycidyl-containing ethylene copolymer.

Nothing in WO97/35910, WO93/08234, or European Patent No. 341731 teach or suggest the particular selection of components which are used to make the two-component thermoplastic compositions of the present invention

### SUMMARY OF THE INVENTION

The present invention provides a slush moldable polyolefin composition which crosslinks in situ during the slush molding process and has superior chemical and temperature resistance.

It is useful in automotive and non-automotive applications including essentially all applications where flexible vinyl sheet or articles molded therefrom have been or can be used.

The composition of the present invention consists essentially of
(a) 5-95 % by weight of a copolymer comprising at least 50% by weight of ethylene, 1-35 % by weight of an (acid containing) unsaturated carboxylic acid, and 0-49 % by weight of a moiety selected from at least one of alkyl acrylate, alkyl methacrylate, vinyl ether, alkylene, carbon monoxide and sulphur dioxide, and further wherein the acid groups are optionally partially neutralized with metal ions; and
(b) 95-5 % by weight of a copolymer comprising at least 50 % by weight of ethylene, 0.5-25 % by weight of at least one reactive moiety selected from the group consisting of
   (i) an unsaturated epoxide of 4-11 carbon atoms,
   (ii) an unsaturated isocyanate of 2-11 carbon atoms,
   (iii) an alkoxy or alkyl silane wherein the alkyl group is from 1-12 carbon atoms,
   (iv) an alkyl halide, and
   (v) oxazoline, and
   0-49 % by weight of a moiety selected from at least one of an alkyl acrylate, alkyl methacrylate, vinylether, alkylene, carbon monoxide and suphur dioxide, where the alkyl and ether groups are of 1-12 carbon atoms.

Preferably, a composition according to the present invention consists essentially of
(a) 10-90 % by weight of a co- or terpolymer of ethylene and 5-25% by weight of a carboxylic acid and an alkylacrylate which is optionally partially neutralized with metal ions, and
(b) 90-10 % by weight of a co- or terpolymer of ethylene and 1-15% by weight of glycidylmethacrylate and optionally an alkylacrylate.
In a further preferred embodiment, according to the present invention, the composition consists essentially of
(a) 30-70% by weight of a co- or terpolymer of ethylene and 5-20% by weight of acrylic- or methacrylic acid and an alkylacrylate which is optionally partially neutralized with metal ions, and
(b) 70-30%, by weight of a co- or terpolymer of ethylene and 1-15% by weight of glycidylmethacrylate and optionally 1-10% by weight of butylacrylate.

The compositions may further comprise any additive which could be useful to enhance or modify their properties, such as fillers, UV or thermal stabilizers, pigments, release to reduce adhesion to metal molds and/or cross-linking catalysts (such as tertiary amines or alkyl halides).

With respect to other additives that can be incorporated into the composition the described process, the following guidelines are offered, and will be readily appreciated by one skilled in the art. Anti-oxidants such as cinnamate or phosphite-based anti-oxidants can be employed, generally at levels of between 0 to 5 % by weight. Standard ultraviolet light absorbers and free-radical scavengers can be employed at levels of between 0 to 3%, leveling agents at 0 to 2%, and anti-popping agents at 0 to 5%.

Specifically with respect to pigment, the composition can contain up to 50% by weight of pigment based on weight of the film-forming components of the coating composition. Any organic and inorganic pigments can be used including phthalocyanine blue; carbon black; metal oxides such as titanium dioxide, zinc oxide, and iron oxide; metallic powders; metal hydroxides and mica flakes.

### DETAILED DESCRIPTION OF THE INVENTION

In one preferred embodiment according to the present invention the composition comprises
i) about 10 to about 90 wt.%, more preferably about 30 to about 60 wt.%, copolymer of ethylene and an alpha,beta-unsaturated C₃-C₈ carboxylic acid, that can be optionally neutralized at least partially with Metal ions selected from group Ia, Ib, IIa, IIIa, IVa, VIb and VIII of the periodic table, and optionally one or more softening comonomers copolymerizable with ethylene. Preferably, the copolymer is selected from one or more α-olefins of the formula R-CH=CH₂, wherein R is a radical of hydrogen or an alkyl radical having from 1 to 8 carbon atoms, copolymerized with one or more α,β-ethylenically unsaturated carboxylic acids having from 3 to 8 carbon atoms, said copolymer being a direct copolymer of the α-olefins and the unsaturated carboxylic acid in which the carboxylic acid groups are randomly distributed over all molecules and in which the α-olefin content of the copolymer is at least 50 mol percent, based on the α-olefin-acid copolymer. The unsaturated carboxylic acid content of the copolymer is preferably from 0.2 to 25 mol %, based on the α-olefin-acid copolymer, and any other monomer component optionally copolymerized in said copolymer.
   and
ii) 90-10 wt.% of a copolymer of ethylene and glycidyl acrylate or glycidyl methacrylate, and optionally a termonomer selected from an alpha olefin or an acrylate.
   Component (ii) functions as a crosslinker. Typical crosslinkers are employed in the stoichiometric range of about 1:0.05 to 1:1.5 with respect to the acid group in the base resin. Preferably, the range is between 1:0.1 to 1:1. The range of acid in the base resin before crosslinking is suitable between about 1 and 30 percent by weight of the ethylene. Preferably, the range is between 4 to 20 percent. The hydroxy functionality in the base resin before crosslinking is suitable between about 0 to 30 percent by weight of the ethylene. Preferably, the range is between 2 to 10 percent.
iii) optionally crosslinking promotors such as tertiary amines or alkyl halides
iv) Pigments
v) Thermal and UV stabiliser
vi) release agents that prevent the aforesaid polymers from sticking to metal surfaces. Examples for such release agents have been found to be polyoxyethylene sorbitan monopalmitate(HLB15.6) as supplied by KAO chemicals or crosslinked silicone gum as supplied by Dow-Corning under MB50-002 or Toray-Dow Corning under the trade name BY27-002.

The thermoplastic alloy compositions are generally prepared by melt blending the polymeric components under high shear conditions, for example, in an extruder. The various ingredients may first be combined with one another e.g., in a pellet blend, or they may be combined with one another via simultaneous or separate metering of the various components. They may also be divided and blended in one or more passes into separate sections of the mixing equipment.

The relationship of time and temperature is important to ensure the resin does not react/crosslink prematurely. The temperature range is maintained at about 60° to 150°C; preferably, between 90° to 120°C. The time at elevated temperature is another variable and depends on the crosslinker. For the preferred crosslinkers, the time at temperature range is between 10 seconds to 1 hour; preferably, between 1 minute to 30 minutes.

The resultant compositions may be ground, preferably cryogenically to a particle size of between 50 and 500 micrometers to produce a powder before being able to be applied in the slush molding process. Alternatively the composition can be processed by means of an aqueous dispersion process as described in U.S. Patent No. 5,928,577.

The invention further relates to a powder prepared from a composition as described herein before, which powder is suitable for use in a slush molding process to produce parts comprising those used in automotive interior applications. In addition, the invention relates to a molded article produced by a slush molding process using such a powder.

Thereafter the powder is dosed into a hot mold held at temperatures between 180 - 270°C, preferably between 200-250°C. The powder melts and levels out to form a homogeneous skin, which can be removed from the mold following a heating cycle of ca 2-6 min and cooling the sheet down.

The film and sheet is useful as free-standing material or as part of a laminated structure. The sheet may be embossed with a grain pattern. Such embossed sheet has excellent grain retention and thus has particular use in simulated leather applications and in instrument panel skins and door skins for automobiles. Optionally the sheet can be filled with inorganic fillers. Useful fillers include flame-retardant fillers such as calcium carbonate or non flame retardant fillers such as mica, talc and glass.

Automotive uses include skins for instrument panels and for other locations such as door panels and other simulated leather coverings. Thickness of the sheet can range from 0.1 to 2mm.

The components employed in the present invention can be described in more detail as follows:

### Acid Copolymer

Suitable olefins include ethylene, propylene, butene-1, pentene-1, hexene-1, heptene-1, 3-methylbutene-1, and 4-methylpentene-1 and the like. Ethylene is the preferred olefin. The concentration of the α-olefin in the copolymer is preferably greater than 80 mol percent. Examples of α,β-ethylenically unsaturated carboxylic acids are acrylic acid, methacrylic acid, ethacrylic acid, itaconic acid, maleic acid, fumaric acid, monoesters of said dicarboxylic acids, such as methyl hydrogen maleate, methyl hydrogen fumarate, ethyl hydrogen fumarate and maleic anhydride. Although maleic anhydride is not a carboxylic acid in that it has no hydrogen attached to the carboxyl groups, it can be considered an acid for the purposes of the present invention because its chemical reactivity is that of an acid. Similarly, other α,β-monoethylenically unsaturated anhydrides of carboxylic acids can be employed. The preferred unsaturated carboxylic acids are methacrylic and acrylic acids. The concentration of acidic monomer in the copolymer is preferably from 1 to 10 mol percent.

More than one olefin can be employed to provide the hydrocarbon nature of the copolymer base. The scope of base copolymers suitable for use in the present invention is illustrated by the following two component examples: ethylene/acrylic acid copolymers, ethylene/methacrylic acid copolymers, ethylene/itaconic acid copolymers, ethylene/methyl hydrogen maleate copolymers, and ethylene/maleic acid copolymers, etc. Examples of tricomponent copolymers include: ethylene/acrylic acid/methyl methacrylate copolymers, ethylene/methacrylic acid/ethyl acrylate copolymers, ethylene/itaconic acid/methyl methacrylate copolymers, ethylene/methyl hydrogen maleate/ethyl acrylate copolymers, ethylene, methacrylic acid/vinyl acetate copolymers, ethylene/acrylic acid/vinyl alcohol copolymers, ethylene/propylene/acrylic acid copolymers, ethylene/styrene/acrylic acid copolymers, ethylene/methacrylic acid/acrylonitrile copolymers, ethylene/fumaric acid/vinyl methyl ether copolymers, ethylene/vinyl chloride/acrylic acid copolymers, ethylene/vinylidene chloride/acrylic acid copolymers, ethylene/vinyl fluoride/methacrylic acid copolymers, and ethylene/chlorotrifluoroethylene/methacrylic acid copolymers.

In addition to the third monomer component of the copolymer stated above, additional third monomeric components can be an alkyl ester of an α,β-ethylenically unsaturated carboxylic acid of 3 to 8 carbon atoms where the alkyl radical has 4 to 18 carbon atoms. Particularly preferred are the terpolymers obtained from the copolymerization of ethylene, methacrylic acid, and alkyl esters of methacrylic acid or acrylic acid with butanol. The concentration of this optional component is 0.2 to 25 mol percent, based on the weight of copolymer, preferably from 1 to 10 mol percent. Representative examples of the third component include n-butyl acrylate, isobutyl acrylate, secondary butyl acrylate, tertiary butyl acrylate, n-butyl methacrylate, isobutyl methacrylate, sec-butyl methacrylate, t-butyl methacrylate, n-pentyl acrylate, n-pentyl methacrylate, isopentyl acrylate, isopentyl methacrylate, n-hexyl acrylate, n-hexyl methacrylate, 2-ethylhexyl acrylate, 2-ethyl-hexyl methacrylate, stearyl acrylate, stearyl methacrylate, n-butyl ethacrylate, 2-ethyl hexyl ethacrylate. Also, the third component includes mono- and di-esters of 4 to 8 carbon atom dicarboxylic acids such as n-butyl hydrogen maleate, sec-butyl hydrogen maleate, isobutyl hydrogen maleate, t-butyl hydrogen maleate, 2-ethyl hexyl hydrogen maleate, stearyl hydrogen maleate, n-butyl hydrogen fumarate, sec-butyl hydrogen fumarate, isobutyl hydrogen fumarate, t-butyl hydrogen fumarate, 2-ethyl hexyl hydrogen fumarate, stearyl hydrogen fumarate, n-butyl fumarate, sec-butyl fumarate, isobutyl fumarate, t-butyl fumarate, 2-ethyl hexyl fumarate, stearyl fumarate, n-butyl maleate, sec-butyl maleate, isobutyl maleate, t-butyl maleate, 2-ethyl hexyl maleate, stearyl maleate. The preferred alkyl esters contain alkyl groups of 4 to 8 carbon atoms. The most preferred contain 4 carbon atoms. Representative examples of the most preferred esters are n-butyl acrylate, isobutyl acrylate, butyl methacrylate, isobutyl methacrylate, tertiary butyl acrylate, tertiary butyl methacrylate.

The copolymers after polymerization but prior to ionic crosslinking (if desired) can be further modified by various reactions to result in polymer modification, which do not interfere with crosslinking. Halogenation of an olefin acid copolymer is an example of such polymer modification. The preferred base copolymers are those obtained by the direct copolymerization of ethylene with a monocarboxylic acid comonomer. The melt index of the polymer generally ranges from 0.1 g/10 minutes to 3000 g/10 minutes, preferably 10 to 2000 g/10 minutes.

The copolymer can optionally be neutralized with 10 to 70% neutralized with metal ions selected from groups Ia, Ib, IIa, IIIa, IVa, VIb, and VIII of the Periodic Table of Elements such as sodium, potassium, zinc, calcium, magnesium, lithium, aluminum, nickel, and chromium. Preferably the copolymer has from about 35 to about 70% of the carboxylic acid groups ionized by neutralization with metal ions selected from the group consisting of sodium, potassium, zinc, calcium, and magnesium.

### Ethylene/Glycidyl (meth)acrylate

The ethylene/glycidyl (meth)acrylate component of the ETP-TPO is an ethylene/glycidyl acrylate or ethylene/glycidyl methacrylate copolymer.

Optionally, and preferably but not exclusively, the ethylene/glycidyl acrylate or ethylene/glycidyl methacrylate copolymer contains copolymerized units of an alkyl acrylate or an alkyl methacrylate having 1-6 carbon atoms and an alpha olefin with 1-8 carbon atoms. The ethylene/glycidyl acrylate or ethylene/glycidyl methacrylate copolymer contains 60-88 weight percent ethylene and 1-12 weight percent glycidyl acrylate or glycidyl methacrylate. Representative alkyl acrylates and alkyl methacrylates that are used in the copolymer include methyl acrylate, ethyl acrylate, propyl acrylate, n-butyl acrylate, isobutyl acrylate, hexyl acrylate, methyl methacrylate, ethyl methacrylate, propyl methacrylate, butyl methacrylate, and hexyl methacrylate. Ethyl acrylate is preferred and n-butyl acrylate is especially preferred. The alpha olefin can be selected from the group of propylene, octene, butene and hexene, propylene is preferred.

The ethylene/glycidyl (meth)acrylate, preferably containing an alkyl acrylate of 1-6 carbon atoms and an alpha olefin with 1-8 carbon atoms , can be prepared by direct polymerization, for example, copolymerizing ethylene, an alkyl acrylate, and glycidyl methacrylate or glycidyl acrylate in the presence of a free-radical polymerization initiator at elevated temperatures, generally 100-270°C, usually 130-230°C, and at elevated pressures, i.e. 140-350 MPa. The most preferred ethylene/glycidyl(meth)acrylate copolymers that are used in this invention are copolymers of ethylene, ethyl acrylate, glycidyl methacrylate, and, especially, ethylene, n-butyl acrylate, and glycidyl methacrylate.

The copolymer should have a Melt Flow Index (190°C/2.16kg) of 10-2000.

### EXAMPLES

All parts in the following examples are based on weight.

In order to prepare the samples, the components as described above are dry blended together with stabilizers and additives and subsequently extruded on a 24mm twin screw extruder with an established temperature profile which leads a melt temperature of less than 100°C at the exit of the die. This is necessary in order to be able to prevent premature crosslinking of the resin before compounding. Also, at more elevated temperatures difficulties would be encountered during strand cutting of the extruder used.

The selection of additive master batches has to take account the aforementioned temperature limitations. Therefore, low molecular weight waxes with a melting temperature of less than 100°C and a high enough Melt Flow Index (MFI) are preferably used in this process. In particular color masterbatches obtained sold by BASF under the tradename Epulene and Sicoversal are suitable for the described invention.

After compounding, the resins are ground in a gryogenic grinder in order to obtain a particle size of approximately 300 micrometers and added into a mold heated to temperatures between 200 and 240°C. After ca 3-4 minutes the mold is cooled down to temperatures between 30 and 60°C and the molded sheet is removed from the mold for further testing. The following tests are undertaken:
Flow: MFI (according to ASTM D1238) Surface appearance
Example 1: 38wt% comp1-1 and 62 wt% comp2-2
Example 2 31.6wt% comp1-1 and 68.4 comp2-2
Example 3: 45 wt comp1-1 and 55 comp2-2
Comparative Example: 20 wt% comp3
   44 wt% comp4
   2% wt% comp2-1
   34% wt% comp1-3

Crosslink density is measured by the amount by weight of polymer insoluble in toluene at room temperature:
High = 80-100%
Medium = 20-40%

Temperature resistance is judged by the amount of permanent set in the compression set test at 120°C according to DIN 53517

| | Nos. | MFI | Surface Appearance | Crosslink Density |
|---|---|---|---|---|
| Example | 1 | 900 | smooth | high |
| | 2 | 900 | smooth | high |
| | 3 | 900 | smooth | high |
| Comp, Example | - | 0.1 | rough-not leveled | medium |

| TEMP RESISTANCE | | | | |
|---|---|---|---|---|
| Example | 1 | | GOOD | |
| | 2 | | GOOD | |
| | 3 | | GOOD | |
| | Comp, Example | | POOR (creeps) | |

### Component 1

### 1-1

A copolymer of ethylene and 12wt % methacrylic acid having a Melt Flow Index (MFI) of 1000 at 190°C/2.16kg according to ASTM D1238

### 1-2

A copolymer of ethylene and 12wt % methacrylic acid having a melt flow index of 100 at 190°C/2.16 kg

### 1-3

A copolymer of ethylene and 12wt % methacrylic acid having a melt flow index of 7 at 190°C/2.16 kg

### Component 2:

### 2-1

A copolymer of ethylene and 1.6wt % glycidyl methacrylate having a MFI of 25 at 190°C/2.16 kg

### 2-2

A copolymer of ethylene and 10 wt % glycidyl methacrylate having a MFI of 1000 at 190°C/2.16 kg

### 2-3

A terpolymer of ethylene, 4wt % n-buthylacrylate and 10wt% glycidylmethacrylate with a MFI of 600 at 190°C/2.16 kg

### Component 3

A polypropylene homopolymer with a MFI of 8 at 230°C/2.16kg (Moplen C30S) obtained from Montell

### Component 4

Nordel® 3681 (Commercial Ethylene Propylene 1-4 Hexadiene terpolymer) obtained from DuPont Dow

Examples 1, 2 and 3 result in a well-leveled continuous polymer film when subject to the aforesaid thermal treatment whereas the Comparative Example represents a powder with poor flow properties which does not result in a leveled film when heated due to the low MFI.

## Claims

1. A composition consisting essentially of:
(a) 5-95% by weight of a copolymer comprising at least 50% by weight of ethylene, 1-35% by weight of an unsaturated carboxylic acid, and 0-49% by weight of a moity selected from at least one of alkyl acrylate, alkyl methacrylate, vinylether, alkylene, carbon monoxide and sulphur dioxide, and wherein the acid groups are optionally partially neutralized with metal ions; and
(b) 95-5% by weight of a copolymer comprising at least 50% by weight of ethylene, 0.5-25% by weight of at least one reactive moiety selected from the group consisting of
(i) an unsaturated epoxide of 4-11 carbon atoms,
(ii) an unsaturated isocyanate of 2-11 carbon atoms,
(iii) an alkoxy or alkyl silane wherein the alkyl group is from 1-12 carbon atoms,
(iv) an alkyl halide, and
(v) oxazoline, and
0-49% by weight of a moiety selected from at least one of an alkyl acrylate, alkyl methacrylate, vinylether, alkylene, carbon monoxide and suphur dioxide, where the alkyl and ether groups are of 1-12 carbon atoms;
the composition optionally additionally comprising additives selected from the group consisting of fillers, stabilizers, pigments, release agents and cross-linking catalysts.

2. A composition according to claim 1 comprising:
(a) 10-90% by weight of a co- or terpolymer of ethylene and 5-25% by weight of a carboxylic acid and an alkylacrylate which is optionally partially neutralized with metal ions, and
(b) 90-10% by weight of a co- or terpolymer of ethylene and 1-15% by weight of glycidylacrylate or methacrylate and optionally an alkylacrylate.

3. A composition according to claim 2 comprising:
(a) 30-70% by weight of a co-or terpolymer of ethylene and 5-20% by weight of acrylic-or methacrylic acid and an alkylacrylate which is optionally partially neutralized with metal ions, and
(b) 70-30%, by weight of a co- or terpolymer of ethylene and 1-15% by weight of glycidylmethacrylate and optionally 1-10% by weight of butylacrylate.

4. A powder prepared from a composition according to any one of claims 1-3 suitable for use in a slush molding process to produce parts comprising those used in automotive interior applications.

5. A molded article produced by a slush molding process using a powder according to claim 4.

6. Use of a composition comprising:
(a) 5-95% by weight of a copolymer comprising at least 50% by weight of ethylene, 1-35% by weight of an unsaturated carboxylic acid, and 0-49% by weight of a moity selected from at least one of alkyl acrylate, alkyl methacrylate, vinylether, alkylene, carbon monoxide and sulphur dioxide, and wherein the acid groups are optionally partially neutralized with metal ions; and
(b) 95-5% by weight of a copolymer comprising at least 50% by weight of ethylene, 0.5-25% by weight of at least one reactive moiety selected from the group consisting of
(i) an unsaturated epoxide of 4-11 carbon atoms,
(ii) an unsaturated isocyanate of 2-11 carbon atoms,
(iii) an alkoxy or alkyl silane wherein the alkyl group is from 1-12 carbon atoms,
(iv) an alkyl halide, and
(v) oxazoline, and
0-49% by weight of a moiety selected from at least one of an alkyl acrylate, alkyl methacrylate, vinylether, alkylene, carbon monoxide and suphur dioxide, where the alkyl and ether groups are of 1-12 carbon atoms;
the composition optionally additionally comprising additives selected from the group consisting of fillers, stabilizers, pigments, release agents and cross-linking catalysts, in a slush molding process.

## Patentansprüche

1. Zusammensetzung, im Wesentlichen bestehend aus:
(a) 5% bis 95 Gew.% eines Copolymers, aufweisend mindestens 50 Gew.% Ethylen, 1% bis 35 Gew.% einer ungesättigten Carbonsäure und 0% bis 49 Gew.% eines Teils, der ausgewählt ist aus mindestens einem der Folgenden: Alkylacrylat, Alkylmethacrylat, Vinylether, Alkylen, Kohlenmonoxid und Schwefeldioxid, und worin die Säure-Gruppen wahlweise zum Teil mit Metall-Ionen neutralisiert sind; sowie
(b) 95% bis 5 Gew.% eines Copolymers, aufweisend mindestens 50 Gew.% Ethylen, 0,5% bis 25 Gew.% mindestens eines reaktionsfähigen Teils, der ausgewählt ist aus der Gruppe, bestehend aus:
(i) einem ungesättigten Epoxid mit 4 bis 11 Kohlenstoffatomen,
(ii) einem ungesättigten Isocyanat mit 2 bis 11 Kohlenstoffatomen,
(iii) einem Alkoxy- oder Alkylsilan, worin die Alkyl-Gruppe 1 bis 12 Kohlenstoffatome hat,
(iv) einem Alkylhalogenid und
(v) Oxazolin, sowie
0% bis 49 Gew.% eines Teils, der ausgewählt ist aus mindestens einem der Folgenden: Alkylacrylat, Alkylmethacrylat, Vinylether, Alkylen, Kohlenmonoxid und Schwefeldioxid, worin die Alkyl- und Ether-Gruppen 1 bis 12 Kohlenstoffatome haben;
wobei die Zusammensetzung wahlweise zusätzlich Additive aufweist, die ausgewählt sind aus der Gruppe, bestehend aus Füllstoffen, Stabilisiermitteln, Pigmenten, Trennmitteln und vernetzenden Katalysatoren.

2. Zusammensetzung nach Anspruch 1, aufweisend:
(a) 10% bis 90 Gew.% eines Co- oder Terpolymers von Ethylen und 5 bis 25 Gew.% einer Carbonsäure und eines Alkylacrylats, das wahlweise mit Metall-Ionen teilweise neutralisiert ist, und
(b) 90% bis 10 Gew.% eines Co- oder Terpolymers von Ethylen und 1% bis 15 Gew.% Glycidylacrylat oder -methacrylat und wahlweise ein Alkylacrylat.

3. Zusammensetzung nach Anspruch 2, aufweisend:
(a) 30% bis 70 Gew.% eines Co- oder Terpolymers von Ethylen und 5 bis 20 Gew.% Acryl- oder Methacrylsäure und einem Alkylacrylat, das wahlweise zum Teil mit Metall-Ionen neutralisiert ist, und
(b) 70% bis 30 Gew.% eines Co- oder Terpolymers von Ethylen und 1% bis 15 Gew.% Glycidylmethacrylat und wahlweise 1% bis 10 Gew.% Butylacrylat.

4. Pulver, hergestellt aus einer Zusammensetzung nach einem der Ansprüche 1 bis 3, geeignet zur Verwendung in einem Sturzgießverfahren zur Erzeugung von Teilen, die solche umfassen, wie sie für die Innenausstattung von Kraftfahrzeugen verwendet werden.

5. Formartikel, hergestellt mit Hilfe des Sturzgießverfahrens unter Verwendung eines Pulvers nach Anspruch 4.

6. Verwendung einer Zusammensetzung, aufweisend:
(a) 5% bis 95 Gew.% eines Copolymers, aufweisend mindestens 50 Gew.% Ethylen, 1% bis 35 Gew.% einer ungesättigten Carbonsäure und 0% bis 49 Gew.% eines Teils, der ausgewählt ist aus mindestens einem der Folgenden: Alkylacrylat, Alkylmethacrylat, Vinylether, Alkylen, Kohlenmonoxid und Schwefeldioxid, und worin die Säure-Gruppen wahlweise zum Teil mit Metall-Ionen neutralisiert sind; sowie
(b) 95% bis 5 Gew.% eines Copolymers, aufweisend mindestens 50 Gew.% Ethylen, 0,5% bis 25 Gew.% mindestens einen reaktionsfähigen Teil, der ausgewählt ist aus der Gruppe, bestehend aus:
(i) einem ungesättigten Epoxid mit 4 bis 11 Kohlenstoffatomen,
(ii) einem ungesättigten Isocyanat mit 2 bis 11 Kohlenstoffatomen,
(iii) einem Alkoxy- oder Alkylsilan, worin die Alkyl-Gruppe 1 bis 12 Kohlenstoffatome hat,
(iv) einem Alkylhalogenid und
(v) Oxazolin, sowie
0% bis 49 Gew.% eines Teils, der ausgewählt ist aus mindestens einem der Folgenden: Alkylacrylat, Alkylmethacrylat, Vinylether, Alkylen, Kohlenmonoxid und Schwefeldioxid, worin die Alkyl- und Ether-Gruppen 1 bis 12 Kohlenstoffatome haben;
wobei die Zusammensetzung wahlweise zusätzlich Additive aufweist, die ausgewählt sind aus der Gruppe, bestehend aus Füllstoffen, Stabilisiermitteln, Pigmenten, Trennmitteln und vernetzenden Katalysatoren, in einem Sturzgießverfahren.

## Revendications

1. Composition consistant essentiellement en:
(a) 5 à 95% en poids d'un copolymère comprenant au moins 50% en poids d'éthylène, 1 à 35% en poids d'un acide carboxylique insaturé et 0 à 49% en poids d'un fragment choisi parmi au moins l'un parmi un acrylate d'alkyle, un méthacrylate d'alkyle, un éther de vinyle, un alkylène, le monoxyde de carbone et le dioxyde de soufre, et dans laquelle les groupes acides sont facultativement partiellement neutralisés avec des ions métalliques; et
(b) 95 à 5% en poids d'un copolymère comprenant au moins 50% en poids d'éthylène, 0,5 à 25% en poids d'au moins un fragment réactif choisi dans le groupe constitué par
(i) un époxyde insaturé de 4 à 11 atomes de carbone,
(ii) un isocyanate insaturé de 2 à 11 atomes de carbone,
(iii) un alcoxy ou alkylsilane dans lequel le groupe alkyle a de 1 à 12 atomes de carbone,
(iv) un halogénure d'alkyle, et
(v) l'oxazoline, et
0 à 49% en poids d'un fragment choisi parmi au moins l'un parmi un acrylate d'alkyle, un méthacrylate d'alkyle, un éther de vinyle, un alkylène, le monoxyde de carbone et le dioxyde de soufre, où les groupes alkyles et éthers ont de 1 à 12 atomes de carbone;
la composition comprenant facultativement de plus des additifs choisis dans le groupe constitué par les charges, les stabilisants, les pigments, les agents anti-adhérents et les catalyseurs de réticulation.

2. Composition selon la revendication 1, comprenant:
(a) 10 à 90% en poids d'un co- ou terpolymère d'éthylène et 5 à 25% en poids d'un acide carboxylique et d'un acrylate d'alkyle qui est facultativement partiellement neutralisé avec des ions métalliques, et
(b) 90 à 10% en poids d'un co- ou terpolymère d'éthylène et 1 à 15% en poids d'acrylate ou méthacrylate de glycidyle et facultativement un acrylate d'alkyle.

3. Composition selon la revendication 2, comprenant:
(a) 30 à 70% en poids d'un co- ou terpolymère d'éthylène et 5 à 20% en poids d'acide acrylique ou méthacrylique et d'un acrylate d'alkyle qui est facultativement partiellement neutralisé avec des ions métalliques, et
(b) 70 à 30% en poids d'un co- ou terpolymère d'éthylène et 1 à 15% en poids de méthacrylate de glycidyle et facultativement 1 à 10% en poids d'acrylate de butyle.

4. Poudre préparée à partir d'une composition selon l'une quelconque des revendications 1 à 3, appropriée pour l'utilisation dans un procédé de moulage par embouage pour produire des pièces comprenant celles utilisées dans des applications d'intérieur d'automobile.

5. Article moulé produit par un procédé de moulage par embouage en utilisant une poudre selon la revendication 4.

6. Utilisation d'une composition comprenant:
(a) 5 à 95% en poids d'un copolymère comprenant au moins 50% en poids d'éthylène, 1 à 35% en poids d'un acide carboxylique insaturé et 0 à 49% en poids d'un fragment choisi parmi au moins l'un parmi un acrylate d'alkyle, un méthacrylate d'alkyle, un éther de vinyle, un alkylène, le monoxyde de carbone et le dioxyde de soufre, et dans laquelle les groupes acides sont facultativement partiellement neutralisés avec des ions métalliques; et
(b) 95 à 5% en poids d'un copolymère comprenant au moins 50% en poids d'éthylène, 0,5 à 25% en poids d'au moins un fragment réactif choisi dans le groupe constitué par
(i) un époxyde insaturé de 4 à 11 atomes de carbone,
(ii) un isocyanate insaturé de 2 à 11 atomes de carbon,
(iii) un alcoxy ou alkylsilane dans lequel le groupe alkyle a de 1 à 12 atomes de carbone,
(iv) un halogénure d'alkyle, et
(v) l'oxazoline, et
0 à 49% en poids d'un fragment choisi parmi au moins l'un parmi un acrylate d'alkyle, un méthacrylate d'alkyle, un éther de vinyle, un alkylène, le monoxyde de carbone et le dioxyde de soufre, où les groupes alkyles et éthers ont de 1 à 12 atomes de carbone;
la composition comprenant facultativement de plus des additifs choisis dans le groupe constitué par les charges, les stabilisants, les pigments, les agents anti-adhérents et les catalyseurs de réticulation, dans un procédé de moulage par embouage.
